# EUROPEAN PATENT SPECIFICATION

(11) **EP 2 080 370 B1**
(45) Date of publication and mention of the grant of the patent: **11.08.2010**
(21) Application number: 06837136.8
(22) Date of filing: 06.11.2006
(51) Int. Cl.: H04N 5/44, H04N 7/24

(54) **METHOD AND APPARATUS FOR TUNING A DIGITAL TELEVISION CHANNEL**
VERFAHREN UND VORRICHTUNG ZUM EINSTELLEN EINES DIGITALFERNSEHKANALS
PROCÉDÉ ET APPAREIL POUR RÉGLER UNE CHAÎNE DE TÉLÉVISION NUMÉRIQUE

(43) Date of publication of application: 22.07.2009
(73) Proprietor: TTE Technology, Inc., Indianapolis, IN 46206 (US)
(72) Inventor: HAWKINS, Bret D., Brownsburg, IN 46112 (US); TENBARGE, James, Fishers, IN 46038 (US)
(74) Representative: Nash, David Allan
(86) International application number: PCT/US2006/043455
(87) International publication number: WO 2008/057080

(56) References cited:
- EP-A- 1 463 320
- EP-A2- 0 751 680
- WO-A-98/30023
- WO-A-2006/121801
- JP-A- 9 009 156
- US-A- 6 016 172
- US-A1- 2005 163 163
- "COMMON INTERFACE SPECIFICATION FOR CONDITIONAL ACCESS AND OTHER DIGITAL VIDEO BROADCASTING DECODER APPLICATIONS" EUROPEAN STANDARD EN 50221, no. EN 50221, February 1997 (1997-02), pages 1-86,1, XP000950003 cited in the application

## Description

### FIELD OF THE INVENTION

The present invention relates to an apparatus and method for digital television reception, and in particular, an apparatus and method for caching or storing conditional access information that reduces the time required to change channels in a digital television system.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Television transmission and reception systems in the United States and abroad are currently transitioning from analog- to digital-based content delivery mechanisms. Consumer demand for digital television services is driven by the improved resolution and overall quality of the digital content (audio and video) compared to prior analog content, as well as the additional content and services offered with digital television services.

For the broadcaster, digital television imposes requirements different from its analog predecessor. Among these requirements is the need for access security, to ensure that only paying subscribers are permitted access to subscription content, for example premium channels, pay-per-view (PPV) programs, video-on-demand (VOD) content, personal video recording (PVR) functionality, online gaming, and/or Internet access. Although access security is not a new problem, in that it was implemented in prior analog broadcasting systems, digital content delivery presents a new frontier of piracy and "bootlegging" in which the stakes are much higher for broadcasters and content developers.

Previously, video and audio content was distributed in analog format, for example using analog video tapes and analog cable television, and unauthorized copies were difficult to produce in quantity and usually substandard in quality. However, current digital techniques have eased the production of high-quality copies to the point that pirates and "bootleggers" are beginning to compete with authorized distributors in the dissemination of content. One solution to this problem is improved access security.

Digital encryption is one popular type of access security particularly suited to protect digital content. The digital content is "scrambled" during encryption in such a way that only those possessing a "decryption key" are able to descramble and receive the content. For example, a popular form of encryption known as "Data Encryption Standard" (DES) involves the exchange of a " DES key" between a content distributor and intended recipient of the content. The "DES key" is used to encrypt or scramble the digital content one or more times using a particular mathematical method, and only those in possession of the "DES key" (and having knowledge of the mathematical method) can successfully decrypt or descramble the digital content.

The mathematical method and "DES key" are specifically designed to impose a severe burden on those attempting to "guess" or discover the "DES key" without authorization from the content distributor. For example, the "DES key" may consist of a string of digital bits (i.e. "1" or "0") in a particular order, in which the string may be 56 or more bits in length. The "DES key" string of bits may be computed using random digital bits in a public-private key exchange, e.g., a Diffie Hellman public key exchange, additional keys may then be derived by applying a secure hash algorithm (SHA), and/or a Dynamic Feedback Arrangement Scrambling Technique (DFAST) engine may be used to generate a 56-bit DES key that is not explicitly shared between distributor and subscriber. In addition, each DES key so computed may be used for only a brief period of time (e.g., 2 seconds), and then the DES key may be changed. In this way, unauthorized persons may find it difficult or impossible to determine many DES keys and descramble the content of an entire program in a reasonable amount of time.

Digital television distributors, including distributors of digital television content via, for example, terrestrial signal, cable, satellite, internet and digital subscriber line (DSL), use the moniker "conditional access" to describe their implementations of access security such as DES digital encryption. The specifics of "conditional access" usually vary from distributor to distributor, but have the common goal of preventing unauthorized access to designated program content. Recent implementations have involved broadcasting some "conditional access" information along with the digital content to be received, for example public key information in the public-private key exchange may be transmitted in addition to audio and video content.

In addition to "conditional access" information, digital television distributors usually broadcast a variety of other information that may be necessary for acquiring the program, or complements the audio and video data associated with the program. For example, program map table (PMT), program system information (PSI), program and packet identifiers (PID), electronic program guide (EPG), emergency alert system (EAS), and other command and control messages such as conditional access information may be transmitted in frequency bands inside or outside the frequency band associated with the selected television program (i.e., "in-band" or "out of band" (OOB)). The other information may correspond to data necessary to conform with various digital standards, such as, MPEG-2. This complementary information may provide to the end user information about upcoming programs, "conditional access" program information, and data for use by the receiving equipment in collecting and processing the broadcast digital content for use, e.g., display by a television set.

Due to the limited capacity or bandwidth of current digital distribution systems, the complementary information including "conditional access" program information may be transmitted or updated at a rate somewhat less than that used for television audio and video content. For example, the program map table (PMT) may be transmitted once every 400 milliseconds, while the audio and video content may be updated more frequently. More specifically, when a user/subscriber selects a "conditional access" program for display, traditional systems require current information included in the PMT in order to acquire the information required to display the "conditional access" program. Therefore, each channel change requires that the current PMT be received, i.e. each such channel change associated with conditional access programming may require at least 400 milliseconds of wait time for display. This wait time may result in an unsatisfactory experience for a user/subscriber.

Given that the satisfaction of paying subscribers may be jeopardized by the significant wait time required for "conditional access" programming, there is a need for a digital television receiver capable of reducing the amount of time required for channel changes associated with conditional access programming, designed for delivery of a variety of digital content, and may be suitable for use with conventional cable television delivery systems. One approach for reducing the amount of time required for channel changes involves caching (or storing) a complete copy of the PMT on memory within the digital television receiver. Although effective, this approach is not commercially feasible due to the large amount of memory required and its associated cost.

An improved technique for tuning digital television channels would be desirable.

### SUMMARY OF THE INVENTION

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

There is provided a method and apparatus for tuning a digital television channel as recited in the appended set of claims.

### BRIEF DESCRIPTION OF THE DRAWINGS

Advantages of the invention may become apparent upon reading the following detailed description and upon reference to the drawings in which:
Fig. 1 is a simplified block diagram illustrating an exemplary digital television system in accordance with one embodiment of the present invention;
Fig. 2 is a flow chart illustrating an exemplary technique for tuning a digital television channel in accordance with one embodiment of the present invention; and
Fig. 3 is a pictorial block diagram illustrating an exemplary system employing a digital television receiver in accordance with one embodiment of the present invention.

### DETAILED DESCRIPTION

One or more specific embodiments of the present invention will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

Looking now to the figures and turning initially to FIG. a simplified block diagram illustrating an exemplary digital television system in accordance with one embodiment is illustrated and generally designated by a reference numeral 100. As illustrated, the digital television system 100 may include a digital television receiver 101, which may include a tuner 103 coupled to a network source 102, a link/demodulation block 104, an out of band receiver/tuner 105, a point of deployment (POD) module 107, a microprocessor system 110 including random access memory (RAM) 111, and a transport demultiplexer 113, which outputs a decrypted video stream 114 to a display system 115.

In operation, a broadcast carrier modulated with signals carrying audio, video, and associated data representing broadcast program content is received from network source 102 by tuner 103, which may utilize hardware and/or software components to successfully tune the in-band quadrature amplitude modulated (QAM) channel using any one of a plurality of known modulation techniques. The tuner 103 may then produce an in-band digital output signal, which is coupled to the link/demodulation block 104, and out of band signals are coupled to the out of band receiver/tuner 105. "In band" refers to those signals transmitted using a carrier frequency traditionally associated with television transmission and reception (e.g., VHF channel 13), while "out of band" (OOB) refers to signals sent via frequencies associated with the selected television program. Information contained in the OOB signals is coupled to the POD module 107 after being tuned/received/demodulated in the OOB receiver/tuner 105.

The in-band digital output is demodulated in link/demodulator block 104. The demodulated output from block 104 includes encrypted digital video signals 106 (as well as other encrypted digital signals, e.g. audio) which are coupled to the POD module 107 for descrambling. The demodulated output from block 104 further includes auxiliary information necessary for tuning and for generating an electronic program guide, including, but not limited to, program system information (PSI), program association table (PAT), and program map table (PMT) information 109, which are coupled to the microprocessor 110. The microprocessor system 110, including software and hardware such as RAM 111, builds a conditional access program map table (CA_PMT) 108 using the PMT information 109, including extracting conditional access descriptors and other information in accordance with, for example, EIA-679B Part B, section 8.4.3.4.

The digital television receiver 101 may also include a PMT cache 120 for storing the PMT information 109 for the most recently accessed digital channel frequency. For example, the PMT cache 120 may include one or more discrete memory devices, or the PMT cache 120 may comprise a set of logical addresses (e.g., in the RAM 111). Alternatively, the PMT cache 120 may include one or more special purpose memory devices, for example EEPROM, flash memory, or other volatile or non-volatile memory technology devices known in the art.

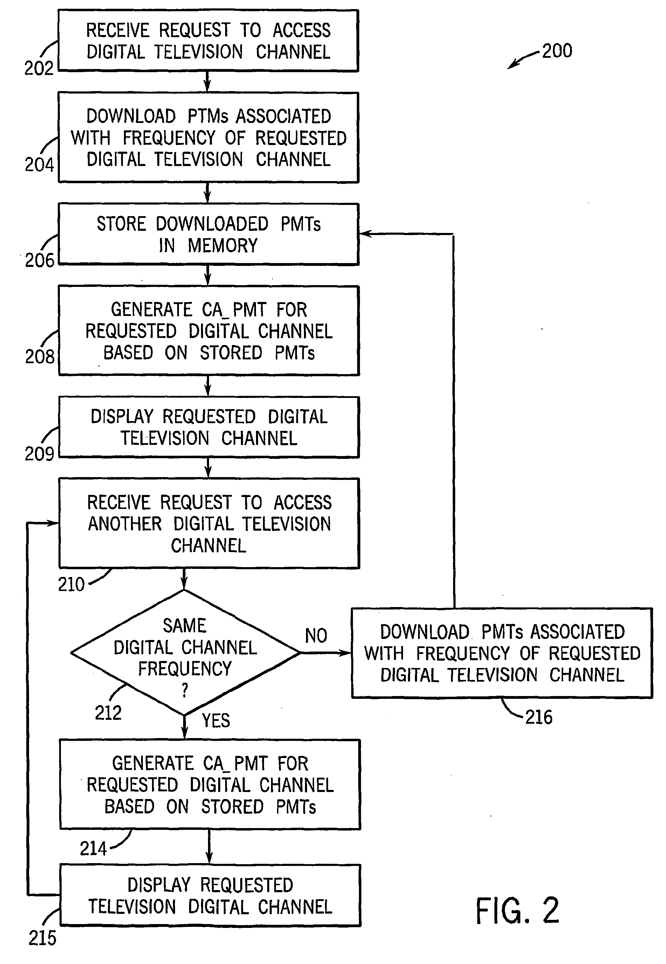

As will be described further with regard to FIG. 2, the digital television receiver 101 may be configured to store the PMT information 109 associated with the most recently accessed digital channel frequency in the PMT cache 120. Consequently, the digital television receiver 101 may be able to generate the CA_PMT 108 for any of the plurality of digital channel carried by the most recently accessed digital channel frequency without having to await the demodulated output from block 104. In this way, channel change requests for digital channel on the most recently accessed frequency can be fulfilled without incurring the delay associated with receiving new in-band PMT information 109. Rather, the PMT information 109 corresponding to the requested channel may be retrieved from the cache 120 in a substantially shorter amount of time.

After the CA_PMT 108 is generated, it may be transmitted to the POD module 107, which acquires the required information for descrambling the encrypted video signals 106 (as well as other signals, e.g. audio). Following processing in the POD module 107, a transport datastream consisting of packets of digital data is coupled to the transport demultiplexer block 113, along with encryption keys (e.g., DES keys) 112, packet identifiers, and other information.

At the transport demultiplexer block 113, decoding of the transport datastream occurs including separation into audio and video signals, for example Motion Picture Expert Group version 2 (MPEG2) decoding may take place. Further decryption of the digital content may occur in the transport demultiplexer block 113, for example, video and audio descrambling using DES decryption may be used prior to coupling the decrypted video 114 (and other content, e.g. audio) to the display system 115 for final decoding and display.

It should be appreciated that the digital tuner 103 in accordance with the above-described embodiment is not so limited to the above described operations, but rather the digital tuner 103 may also perform a variety of other suitable processing operations prior to providing in-band digital output signals suitable for use in the link/demodulation block 104. For example, the digital tuner 103 may perform coding, decoding, scrambling, descrambling, rotating, and/or derotating operations prior to passing the digital output signals to link/ demodulation block 104.

As described above, the digital television receiver 101 may be configured to store the PMT information 109 for one or more digital television frequencies in order to decrease the time between digital channel changes. Accordingly, FIG. 2 is a flow chart illustrating an exemplary technique 200 for tuning a digital television channel in accordance with one embodiment. In one embodiment, the digital television receiver 101 may execute the technique 200. In alternate embodiments, however, other suitable digital television systems may employ the technique 200.

As illustrated by block 202 of FIG. 2, the technique 200 may begin by receiving a request to access a digital television channel. For example, in one embodiment, the digital television receiver 101 may receive a channel request from a user via a television remote control. After receiving the request to access the digital television channel, the technique 200 may include downloading the PMT information 109 associated with the frequency of the requested digital television channel, as indicated by block 204. For example, as will be appreciated by those of ordinary skill in the art, a single digital television frequency may carry multiple digital television channels. As such, downloading the PMT information associated with the frequency of the requested digital television channel may include downloading the PMT information 109 for a multitude of digital television channels besides the requested digital television channel.

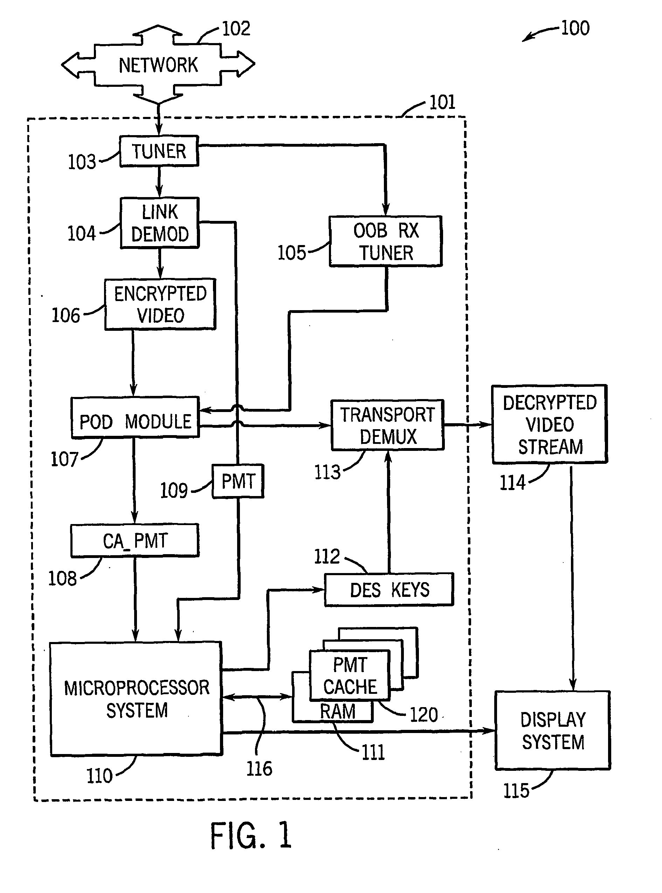

After the PMT information 109 associated with the frequency of the requested digital television channel has been downloaded, they may be stored in memory, as indicated by block 206. For example, in one embodiment, the downloaded PMT information 109 may be stored in the PMT cache 120. As illustrated, the technique 200 may also include generating a CA_PMT for the requested digital channel based on the stored PMT information 109 for that digital channel, as indicated by block 208. In one embodiment, generating the CA_PMT may proceed as outlined above with regard to FIG. 1. After generating the CA_PMT, the technique 200 may involve displaying the requested digital channel, as indicated by block 209.

At some point after displaying the digital channel, the technique 200 may include receiving a request to access another digital television channel, as indicated by block 210. After receiving the request to access another digital television channel, the technique 200 may involve determining whether the newly requested digital television channel is on the same frequency as the previously accessed digital television channel (block 212). If the newly requested digital television channel is on the same digital television frequency as the previously requested digital television channel, the technique 200 may include generating a CA_PMT for the newly requested digital channel based on the stored PMT information 109, as indicated by block 214. After generating the CA_PMT for the newly requested digital channel, the technique 200 may display the newly requested channel (block 215) and then cycle back to block 210 and await another digital television channel request.

If, however, the newly requested digital television channel is on a different digital television frequency than the previously requested digital television channel, the technique 200 may include downloading the PMT information 109 associated with the frequency of the newly requested digital television channel, as indicated by block 216. After downloading the PMT information 109 associated with the frequency of the new digital television channel request, the technique 200 may cycle back to block 206 and proceed as described above. In one embodiment, the technique 200 may then involve overwriting the PMT information 109 associated with the originally requested digital television channel.

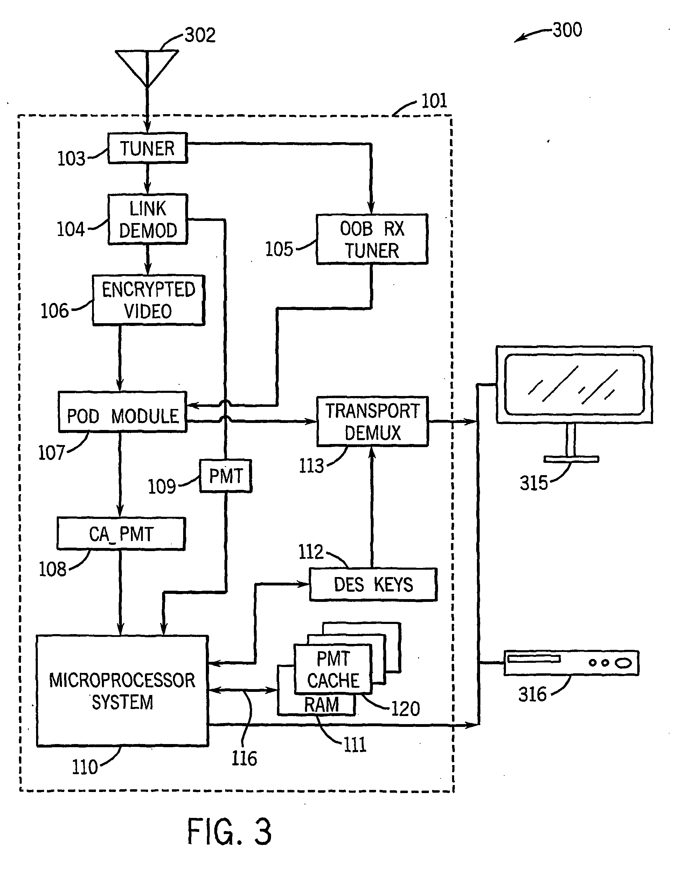

Looking next at FIG. 3, a digital television reception system 300 in accordance with one embodiment is illustrated. For simplicity, like reference numerals have been used to designate those features previously described in regard to FIG. 1. The digital television reception system 300 includes a source signal reception device 302, the digital television receiver 101, a program display device 315, and a program recording device 316. The source signal reception device 302 may include, for example, a conventional antenna configured to receive terrestrial or over-the-air (OTA) television signals. Of course, it should be apparent that source signal reception device 302 is not so limited, and may include one or a plurality of reception devices configured for placement at ground level or otherwise and configured to receive analog or digital terrestrial television signals, satellite television signals, cable television signals, or other television signals desired to be received. The source signal reception device 302 may include amplifiers, pre-amplifiers, or other components for television reception as is well known in the art. The source signal reception device 302 may be coupled to the digital television receiver 101 via coaxial cable, fiber optic cable, ribbon cable, high speed data transmission line, or other signal transmission conduit known in the art.

The digital television receiver 101 includes the tuner 103, the link/demodulation block 104, the out of band receiver/tuner 105, the point of deployment (POD) module 107, the microprocessor system 110 including the random access memory (RAM) 111 and the PMT cache 120, and the transport demultiplexer block 113, configured as described above with reference to FIG. 1. The output signals from the receiver 101 are coupled to the program display device 315 and program recording device 316, respectively. The program display device 315 and the program recording device 316 may include, for example, a wide-screen television display, audio processor/receiver and speakers, personal video recorder (PVR), interactive television device configured to permit Internet browsing, personal computer, or other devices with which descrambled and/or decoded digital television content may be used.

## Claims

1. A method comprising:
receiving a request to access a first digital television channel, wherein the first digital television channel is transmitted at a frequency;
downloading a first program map table ("PMT") (109) associated with the frequency of the first digital television channel;
storing the first PMT;
receiving a request to access a second digital television channel after storing the first PMT;
determining if the second digital television channel is transmitted at the same frequency as the first digital television channel; and
creating a conditional access PMT (108) for the second digital television channel based on the stored PMT if the second digital television channel is transmitted of the same frequency as the first digital television channel.

2. The method, as set forth in claim 1, comprising:
displaying the first digital television channel on a display device (315).

3. The method, as set forth in claim 1, comprising creating a conditional access PMT for the first digital television channel.

4. The method, as set forth in claim 1, comprising downloading a second PMT for the frequency of the second digital television channel if the second digital television channel is transmitted at a different frequency to the first digital television channel.

5. The method, as set forth in claim 4, wherein storing the first PMT comprises storing the first PMT in a cache (120), and comprising storing the second PMT in the cache (120).

6. The method, as set forth in claim 5, wherein storing the second PMT in the cache (120) comprises overwriting the first PMT.

7. A digital television receiver (101) comprising:
a memory (111); and
a microprocessor system (110) configured to generate a conditional access program map table for a first digital television channel transmitted at a transmission frequency based on program map table information (109) and to initiate storage of the program map table information associated with the first digital television channel and the transmission frequency of the first digital television channel in the memory (111).

8. The digital television receiver (101), as set forth in claim 7, wherein, before accessing the second digital television channel, the microprocessor system is configured to determine that the program map table information stored in the memory (111) is associated with a second digital television channel if the transmission frequency of the first digital television channel is the same as the transmission frequency of the second digital television channel.

9. The digital television receiver (101), as set forth in claim 8, wherein the microprocessor system is configured to generate a conditional access program map table for the second digital television channel based on the program map table information stored in the memory (111) if the program map table information stored in the memory (111) is associated with the second digital television channel.

10. The digital television receiver (101), as set forth in claim 7, comprising a display device (315) configured to display the first digital television channel.

11. The digital television receiver (101), as set forth in claim 7, wherein the memory (111) comprises a cache memory (120).

12. A computer readable storage medium comprising:
code adapted to cause a computer or microprocessor system to perform the method claimed in any of claims 1-6.

## Patentansprüche

1. Verfahren, umfassend:
das Empfangen einer Anforderung, auf einen ersten digitalen Fernsehkanal zuzugreifen, wobei der erste digitale Fernsehkanal bei einer Frequenz übertragen wird;
das Herunterladen einer ersten Programmzuordnungstabelle ("PMT") (109), die mit der Frequenz des ersten digitalen Fernsehkanals verbunden ist;
das Speichern der ersten PMT;
das Empfangen einer Anforderung, auf einen zweiten digitalen Fernsehkanal zuzugreifen, und zwar nach dem Speichern der ersten PMT;
das Feststellen, ob der zweite digitale Fernsehkanal auf der gleichen Frequenz übertragen wird wie der erste digitale Fernsehkanal; und
das Erzeugen einer PMT (108) mit bedingtem Zugriff für den zweiten digitalen Fernsehkanal abhängig von der gespeicherten PMT, falls der zweite digitale Fernsehkanal auf der gleichen Frequenz übertragen wird wie der erste digitale Fernsehkanal.

2. Verfahren nach Anspruch 1, umfassend:
das Anzeigen des ersten digitalen Fernsehkanals auf einer Anzeigevorrichtung (315).

3. Verfahren nach Anspruch 1, umfassend das Erzeugen einer PMT mit bedingtem Zugriff für den ersten digitalen Fernsehkanal.

4. Verfahren nach Anspruch 1, umfassend das Herunterladen einer zweiten PMT für die Frequenz des zweiten digitalen Fernsehkanals, falls der zweite digitale Fernsehkanal auf einer von dem ersten digitalen Fernsehkanal verschiedenen Frequenz übertragen wird.

5. Verfahren nach Anspruch 4, worin das Speichern der ersten PMT das Speichern der ersten PMT in einem Cache (120) umfasst, und das Speichern der zweiten PMT in dem Cache (120).

6. Verfahren nach Anspruch 5, worin das Speichern der zweiten PMT in dem Cache (120) das Überschreiben der ersten PMT umfasst.

7. Digitaler Fernsehempfänger (101), umfassend:
einen Speicher (111); und
ein Mikroprozessorsystem (110), das dafür konfiguriert ist, eine Programmzuordnungstabelle mit bedingtem Zugriff für einen ersten digitalen Fernsehkanal zu erzeugen, der auf einer Übertragungsfrequenz übertragen wird, und zwar gestützt auf Information aus der Programmzuordnungstabelle (109), und dafür, das Speichern der Information der Programmzuordnungstabelle, die dem ersten digitalen Fernsehkanal zugewiesen ist, und der Übertragungsfrequenz des ersten digitalen Fernsehkanals in dem Speicher (111) zu initiieren.

8. Digitaler Fernsehempfänger (101) nach Anspruch 7, worin das Mikroprozessorsystem dafür konfiguriert ist, vor dem Zugriff auf den zweiten digitalen Fernsehkanal festzustellen, dass die Programmzuordnungstabellen-Information, die im Speicher (111) abgelegt ist, einem zweiten digitalen Fernsehkanal zugewiesen ist, falls die Übertragungsfrequenz des ersten digitalen Fernsehkanals gleich der Übertragungsfrequenz des zweiten digitalen Fernsehkanals ist.

9. Digitaler Fernsehempfänger (101) nach Anspruch 8, worin das Mikroprozessorsystem dafür konfiguriert ist, eine Programmzuordnungstabelle mit bedingtem Zugriff für den zweiten digitalen Fernsehkanal aus der im Speicher (111) abgelegten Programmzuordnungstabellen-Information zu erzeugen, falls die im Speicher (111) abgelegte Programmzuordnungstabellen-Information dem zweiten digitalen Fernsehkanal zugewiesen ist.

10. Digitaler Fernsehempfänger (101) nach Anspruch 7, umfassend eine Anzeigevorrichtung (315), die dafür konfiguriert ist, den ersten digitalen Fernsehkanal zu übertragen.

11. Digitaler Fernsehempfänger (101) nach Anspruch 7, wobei der Speicher (111) einen Cachespeicher (120) enthält.

12. Computerlesbares Speichermedium, umfassend:
einen Code, der dafür ausgelegt ist, dass er einen Computer oder ein Mikroprozessorsystem veranlasst, das Verfahren nach irgendeinem der Ansprüche 1 bis 6 auszuführen.

## Revendications

1. Procédé comprenant :
la réception d'une demande d'accès à un premier canal de télévision numérique, dans lequel le premier canal de télévision numérique est émis à une certaine fréquence ;
le téléchargement d'une première table (109) de présentation de programme (PMT pour "Program Map Table") associée à la fréquence du premier canal de télévision numérique ;
la mémorisation de la première PMT ;
la réception d'une demande d'accès à un deuxième canal de télévision numérique après mémorisation de la première PMT ;
la détermination de ce que le deuxième canal de télévision numérique est ou non émis à la même fréquence que le premier canal de télévision numérique ; et
la création d'une PMT (108) à accès conditionnel pour le deuxième canal de télévision numérique en se basant sur la PMT mémorisée si le deuxième canal de télévision numérique est émis à la même fréquence que le premier canal de télévision numérique.

2. Procédé selon la revendication 1, comprenant l'affichage du premier canal de télévision numérique sur un premier dispositif (315) d'affichage.

3. Procédé selon la revendication 1, comprenant la création d'une PMT à accès conditionnel pour le premier canal de télévision numérique.

4. Procédé selon la revendication 1, comprenant le téléchargement d'une deuxième PMT pour la fréquence du deuxième canal de télévision numérique si le deuxième canal de télévision numérique est émis à une fréquence différente du premier canal de télévision numérique.

5. Procédé selon la revendication 4, dans lequel la mémorisation de la première PMT comprend la mémorisation de la première PMT dans une antémémoire (120), et comprenant la mémorisation de la deuxième PMT dans l'antémémoire (120).

6. Procédé selon la revendication 5, dans lequel la mémorisation de la deuxième PMT dans l'antémémoire (120) comprend l'écrasement de la première PMT.

7. Récepteur (101) de télévision numérique comprenant :
une mémoire (111) ; et
un système (110) de microprocesseur constitué pour engendrer une table de présentation de programme à accès conditionnel pour un premier canal de télévision numérique émis à une fréquence d'émission basée sur une information (109) de table de présentation de programme et pour lancer la mémorisation, dans la mémoire (111), de l'information de table de présentation de programme associée au premier canal de télévision numérique et de la fréquence d'émission du premier canal de télévision numérique.

8. Récepteur (101) de télévision numérique selon la revendication 7, dans lequel, avant d'accéder au deuxième canal de télévision numérique, le système de microprocesseur est configuré pour déterminer que l'information de table de présentation de programme mémorisée dans la mémoire (111) est associée à un deuxième canal de télévision numérique si la fréquence d'émission du premier canal de télévision numérique est la même que la fréquence d'émission du deuxième canal de télévision numérique.

9. Récepteur (101) de télévision numérique selon la revendication 8, dans lequel le système de microprocesseur est configuré pour engendrer une table de présentation de programme à accès conditionnel pour le deuxième canal de télévision numérique en se basant sur l'information de table de présentation de programme mémorisée dans la mémoire (111) si l'information de table de présentation de programme mémorisée dans la mémoire (111) est associée au deuxième canal de télévision numérique.

10. Récepteur (101) de télévision numérique selon la revendication 7, comprenant un dispositif (315) d'affichage constitué pour afficher le premier canal de télévision numérique.

11. Récepteur (101) de télévision numérique selon la revendication 7, dans lequel la mémoire (111) comprend une antémémoire (120).

12. Support de mémorisation lisible par processeur comprenant du code apte à faire qu'un processeur ou un système de microprocesseur mette en ouvre le procédé selon l'une quelconque des revendications 1 à 6.
